(19) Europäisches Patentamt
European Patent Office
Office européen des brevets

(11) EP 1 105 541 B1

(12) **EUROPÄISCHE PATENTSCHRIFT**

(45) Veröffentlichungstag und Bekanntmachung des Hinweises auf die Patenterteilung:
**25.09.2002 Patentblatt 2002/39**

(21) Anmeldenummer: **99934664.6**

(22) Anmeldetag: **12.07.1999**

(51) Int Cl.[7]: **C21B 13/00**, C21B 13/14

(86) Internationale Anmeldenummer:
**PCT/EP99/04876**

(87) Internationale Veröffentlichungsnummer:
**WO 00/009764 (24.02.2000 Gazette 2000/08)**

(54) **VERFAHREN ZUR HERSTELLUNG VON FLÜSSIGEM ROHEISEN**

METHOD FOR PRODUCING LIQUID PIG IRON

PROCEDE DE FABRICATION DE FONTE BRUTE LIQUIDE

(84) Benannte Vertragsstaaten:
**BE DE FR GB IT LU NL SE**

(30) Priorität: **13.08.1998 AT 139398**

(43) Veröffentlichungstag der Anmeldung:
**13.06.2001 Patentblatt 2001/24**

(73) Patentinhaber:
- **VOEST-ALPINE Aktiengesellschaft A-4020 Linz (AT)**
- **Deutsche Voest-Alpine Industrieanlagenbau GmbH 40219 Düsseldorf (DE)**

(72) Erfinder:
- **KEPPLINGER, Leopold, Werner A-4060 Leonding (AT)**
- **WIEDER, Kurt A-4311 Schwertberg (AT)**
- **MIZELLI, Herbert A-4563 Micheldorf (AT)**
- **STOCKINGER, Josef A-4060 Leonding (AT)**
- **WURM, Johann A-4283 Bad Zell (AT)**
- **ZAHEDI, Parviz A-4481 Asten (AT)**

(74) Vertreter: **VA TECH Patente GmbH & Co Stahlstrasse 21 a 4020 Linz (AT)**

(56) Entgegenhaltungen:
**EP-A- 0 182 775**
**EP-A- 0 446 860**
**US-A- 5 320 676**

- **PATENT ABSTRACTS OF JAPAN vol. 012, no. 398 (C-538), 21. Oktober 1988 (1988-10-21) & JP 63 140014 A (NIPPON KOKAN KK), 11. Juni 1988 (1988-06-11)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 105 541 B1

## Beschreibung

Die Erfindung betrifft ein Verfahren zur Herstellung von flüssigem Roheisen oder Stahlvorprodukten aus stükkigem eisenhältigem Material, wie teil- und/oder fertigreduziertem Eisenschwamm, in einem Einschmelzvergaser, in dem unter Zuführung von stückiger Kohle sowie gegebenenfalls anderem kohlenstoffhältigem Material und sauerstoffhältigem Gas bei gleichzeitiger Bildung eines Reduktionsgases das eisenhältige Material eingeschmolzen wird, gegebenenfalls nach vorheriger Fertigreduktion, wobei stückige Kohle dem Einschmelzvergaser von oben zugeführt wird und, zusammen mit dem eisenhältigen Material, im Einschmelzvergaser ein Festbett bildet, dabei ihren Anteil an flüchtigen Kohlenwasserstoffen in den über dem Festbett befindlichen Kuppelraum abgibt und wobei Staubbrenner, welche mit feinteilchenförmigem Kohlenstoffträger und einem sauerstoffhältigen Gas betrieben werden, in einer horizontalen Querschnittsebene des Kuppelraumes in etwa gleichen Abständen voneinander den Mantel des Einschmelzvergasers durchsetzen und schräg von oben gegen die Oberfläche des Festbettes gerichtet werden.

Bei Verfahren des Standes der Technik, beispielsweise nach US5320676A1, ist es bekannt, stückige Kohle als Energieträger direkt dem Einschmelzvergaser zuzuführen. Die Kohle wird dabei dem Einschmelzvergaser von oben aufgegeben und im Einschmelzvergaser aufgrund der darin herrschenden Temperaturen einer Schockerhitzung unterzogen. Durch die Erhitzung der Kohle in diesem Pyrolyseschritt wird deren Anteil an flüchtigen Kohlenwasserstoffen ausgetrieben und als Gas in den Kuppelraum abgegeben. Da es erforderlich ist, die bei der Pyrolyse freigesetzten Kohlenwasserstoffe im Reduktionsgas umzusetzen, wird bisher eine Kuppeltemperatur von etwa 1050 °C benötigt, um eine thermische Zersetzung innerhalb einer gewissen Verweilzeit im Einschmelzvergaser sicherzustellen.

Diese thermische Zersetzung hat nun zur Folge, daß neben Wasserstoff als Reduktionsgaskomponente auch Kohlenstoff in Form von Ruß gemäß

$$C_nH_m \xrightarrow{T,t} {}^{m}/_{2}\,H_2 + n\,C \qquad (I)$$

gebildet wird, welcher eine zusätzliche, sehr feinkörnige Staubfracht darstellt.

Bedingt durch die Größe des Kuppelraumes und geringen Gasgeschwindigkeiten kommt es zu einer ungleichen Gasverteilung und damit zu einer inhomogenen Gasdurchmischung. Dies führt zu einer nicht ausreichenden Erwärmung von in kritischen Zonen befindlichen Kohlepartikeln, damit zu unvollständiger Entgasung, mit dem Ergebnis, daß der Kohlestaub, welcher mit dem Reduktionsgas aus dem Einschmelzvergaser abgezogen wird, zum Agglomerieren neigt.

Ein weiterer Effekt der unzureichenden Gasdurchmischung im Kuppelraum besteht darin, daß die Verweilzeit der Kohlenwasserstoffe in kritischen Zonen des Kuppelraumes nicht ausreicht, um deren vollständige thermische Zersetzung sicherzustellen. Dies wiederum wirkt sich negativ auf das Reduktionspotential des aus dem Einschmelzvergaser abgezogenen Reduktionsgases aus.

Es ist weiters bekannt, dem Einschmelzvergaser durch von schräg oben gegen die Festbettoberfläche gerichtete Staubbrenner zusätzliche Energie zuzuführen. Solche Brenner werden mit feinteilchenförmigen Kohlenstoffträgern, üblicherweise kohlenstoffhältigem, prozeßeigenem Staub, und einem sauerstoffhältigen Gas, beispielsweise technischem Sauerstoff oder Luft, betrieben. Der Betrieb dieser Staubbrenner erfolgt üblicherweise unterstöchiometrisch, d.h., neben des Einbringens zusätzlicher Energie in den Einschmelzvergasungsprozeß liegt der Zweck der Staubbrenner in der Erzeugung von Reduktionsgaskomponenten (CO und $H_2$).

Aufgabe der gegenständlichen Erfindung ist es nun, ein Verfahren bereitzustellen, bei welchem die Reaktionsbedingungen im Kuppelraum des Einschmelzvergasers derart gestaltet werden, daß die Bildung von Ruß bei der Zersetzung von aus der Kohle ausgetriebenen Kohlenwasserstoffen weitgehend verhindert wird. Insgesamt soll die mit dem Reduktionsgas aus dem Einschmelzvergaser ausgetragene Staubfracht und auch die Agglomerationsneigung des weiterhin ausgetragenen Staubes verringert werden.

Diese Aufgabe wird erfindungsgemäß dadurch gelöst, daß der Betrieb der Staubbrenner mit feinteilchenförmigem Kohlenstoffträger und sauerstoffhältigem Gas so gesteuert wird, daß die Verbrennung des Kohlenstoffanteils des feinteilchenförmigen Kohlenstoffträgers - entsprechend der eingestellten Stöchiometrie - zu mindestens 40% zu $CO_2$ erfolgt, wodurch die von der Kohle abgegebenen flüchtigen Kohlenwasserstoffe oxidierend umgesetzt werden.

Durch das $CO_2$, welches von den Brennern auf den Ort der Freisetzung der Kohlenwasserstoffe strömt, werden diese nicht mehr thermisch (siehe oben), sondern oxidierend gemäß

$$C_nH_m + n\,CO_2 \Rightarrow 2n\,CO + {}^{m}/_{2}\,H_2 \qquad (II)$$

umgesetzt.

Aus dem Stand der Technik ist bekannt, daß diese Reaktion bei Vorliegen eines Katalysators, beispielsweise Fe-Staub, welcher im Kuppelraum des Einschmelzvergasers auf jeden Fall in ausreichender Menge vorhanden ist, auch bei niedrigeren Temperaturen ausreichend schnell abläuft.

Durch das erfindungsgemäße Verfahren ist es erstmals möglich, die thermische Zersetzung der aus der Kohle ausgetriebenen Kohlenwasserstoffe zu Wasserstoff und Ruß weitgehend zu verhindern und gleichzeitig zusätzliche Reduktionsgaskomponenten zu gewinnen.

Nach einer bevorzugten Ausführungsform des erfindungsgemäßen Verfahrens wird der Betrieb der Staubbrenner so gesteuert, daß die Verbrennung des Kohlenstoffanteils des feinteilchenförmige Kohlenstoffträgers zu mindestens 70% zu $CO_2$ erfolgt.

Da die thermische und die oxidierende Zersetzung bzw. Umsetzung der Kohlenwasserstoffe miteinander konkurrierende Reaktionen sind, ist es von Vorteil, wenn die oxidierende Umsetzung durch ein höheres Angebot bzw. - bezogen auf die Kohlenwasserstoffe - einen Überschuß an Oxidanten im Kuppelraum bevorzugt wird.

Nach einer weiteren Ausführungsform des erfindungsgemäßen Verfahrens werden die Staubbrenner so ausgerichtet, daß durch die Brennerflammen im Kuppelraum eine gasdurchmischende Wirbelströmung erzeugt wird.

Durch die Erzeugung einer gasdurchmischenden Wirbelströmung wird einerseits eine gleichmäßigere Durchmischung und damit Durchwärmung aller im Kuppelraum befindlichen Gase und Feststoffpartikel gewährleistet, andererseits werden damit auch die Verweilzeiten der Gase und Feststoffe im Kuppelraum vergleichmäßigt, so daß damit eine weitergehende, idealerweise vollständige, oxidierende Umsetzung der Kohlenwasserstoffe ermöglicht wird.

Zur Erzeugung dieser gasdurchmischenden Wirbelströmung ist es von Vorteil, wenn die Staubbrenner entlang von zur vertikalen Zentralachse des Einschmelzvergasers gleichsinnig windschief stehenden Linien ausgerichtet werden.

Die Staubbrenner sind also, ausgehend vom Mantel des Einschmelzvergasers, schräg nach unten gerichtet, sind allerdings nicht konvergierend, also nicht auf die vertikale Zentralachse des Einschmelzvergasers, ausgerichtet, sondern "zeigen" gewissermaßen an der Zentralachse vorbei.

Diese Ausführungsform weist den Vorteil auf, daß durch die Staubbrenner eine spiralförmige Wirbelströmung erzeugt wird, welche für eine gleichmäßige Durchmischung der Komponenten des Kuppelraumes und deren Verweilvergleichmäßigung besonders geeignet ist.

Ein weiterer Vorteil besteht darin, daß die Brennerflammen nicht direkt auf die Chargierstelle der Kohle, also den Zentralbereich der Festbettoberfläche, gerichtet sind, wodurch ein übermäßiger thermischer Kornzerfall durch schlagartige Entgasung verhindert wird.

Zur Durchführung des erfindungsgemäßen Verfahrens dient eine geeignete Vorrichtung zur Herstellung von Roheisen oder Stahlvormaterial aus stückigem eisenhältigem Material, wie teil- und/oder fertigreduziertem Eisenschwamm, mit einem Einschmelzvergaser mit einer Chargiervorrichtung für stückige Kohle, einer Reduktionsgasableitung mit einem Feststoffabscheider zum Abzug von erzeugtem Reduktionsgas, einer Gasleitung für sauerstoffhältiges Gas, einer Aufgabevorrichtung für das eisenhältige Material, einem Abstich für schmelzflüssige Schlacke und schmelzflüssiges Roheisen, sowie mit Staubbrennern, wobei jeder Staubbrenner mit einer Staubleitung für feinteilchenförmige Kohlenstoffträger und einer Zuleitung für sauerstoffhältiges Gas versehen ist und wobei ein unterer Abschnitt des Einschmelzvergasers zur Aufnahme von flüssigem Roheisen bzw. Stahlvormaterial und flüssiger Schlacke, ein mittlerer Abschnitt zur Aufnahme eines Festbettes aus stückiger Kohle und stückigem eisenhältigen Material, sowie ein oberer Abschnitt als Kuppelraum vorgesehen sind, und wobei die Staubbrenner in einem Höhenabschnitt des Kuppelraumes den Mantel des Einschmelzvergasers durchsetzen und im wesentlichen gleichmäßig voneinander beabstandet angeordnet und schräg von oben gegen die Oberfläche des Festbettes gerichtet sind.

Eine solche Vorrichtung ist dadurch gekennzeichnet, daß die Chargiervorrichtung für stückige Kohle so angeordnet ist, daß die Zuführrichtung der stückigen Kohle im wesentlichen fluchtend mit der vertikalen Zentralachse des Einschmelzvergasers ausgebildet ist und daß die Staubbrenner entlang von zur vertikalen Zentralachse des Einschmelzvergasers gleichsinnig windschief stehenden Linien ausgerichtet sind, wobei die Staubbrenner mit der Staubleitung und der Zuleitung für einen zumindest 40 %igen Umsatz des Kohlenstoffanteils des feinteilchenförmigen Kohlenstoffträgers zu $CO_2$ ausgelegt sind.

Gemäß einem vorteilhaften Merkmal der Vorrichtung weisen die Linien, entlang welcher Staubbrenner ausgerichtet sind, jeweils denselben Normalabstand von der vertikalen Zentralachse des Einschmelzvergasers auf.

Als Normalabstand ist hier der Abstand zwischen zwei Geraden zu verstehen, welcher entlang einer dritten Geraden gemessen wird, welche mit den beiden anderen Geraden, also der Linie, entlang welcher ein Staubbrenner ausgerichtet ist und der vertikalen Zentralachse des Einschmelzvergasers, jeweils einen rechten Winkel einschließt.

Damit läßt sich eine die Geometrie des Einschmelzvergasers bzw. des Kuppelraumes besonders vorteilhaft ausnutzende Wirbelströmung, insbesondere eine spiralförmige Wirbelströmung erzielen.

Nach einem weiteren Merkmal der Vorrichtung sind zwei bis sechs, vorzugsweise vier, gleichmäßig voneinander beabstandete Staubbrenner vorgesehen, die den Mantel des Einschmelzvergasers durchsetzen.

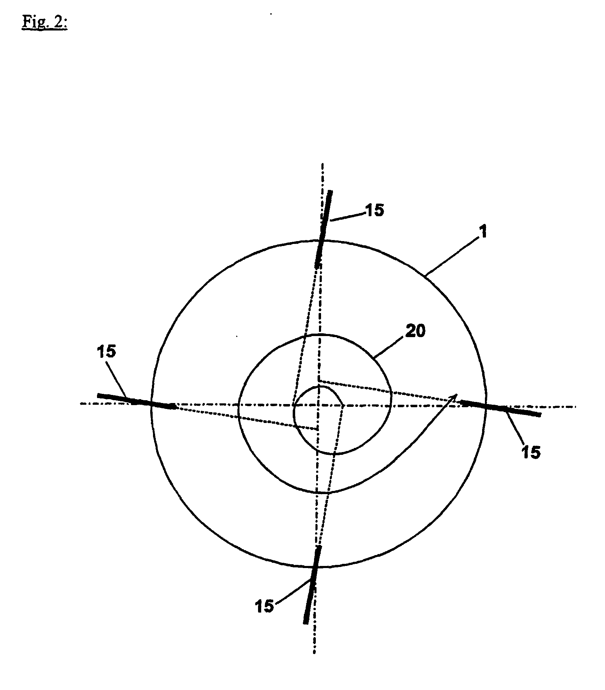

Die Erfindung ist nachfolgend in den Zeichnungen Fig. 1 und Fig. 2 näher erläutert.

Fig. 1 zeigt schematisch einen vertikalen Schnitt durch einen Einschmelzvergaser 1. Dem Einschmelzvergaser 1 wird über eine Chargiervorrichtung 2, beispielsweise ein Schneckenfördersystem, stückige Kohle aufgegeben. Mittels einer Aufgabevorrichtung 3 wird dem Einschmelzvergaser 1 weiters stückiges eisenhältiges Material, beispielsweise Eisenschwamm, aufgegeben. Dem Einschmelzvergaser 1 wird weiters über Gasleitungen 4 ein sauerstoffhältiges Gas, insbesondere technischer Sauerstoff, wie er aus einer Luftzerlegungsanlage erhalten wird, zugeführt.

Stückige Kohle und Eisenschwamm bilden in einem mittleren Abschnitt 5 des Einschmelzvergasers 1 ein Festbett 6, in welchem die stückige Kohle mittels des sauerstoffhältigen Gases zu einem CO- und $H_2$-hältigen Reduktionsgas vergast und der Eisenschwamm dabei gegebenenfalls fertigreduziert und zu flüssigem Roheisen erschmolzen wird.

In einem unteren Abschnitt 7 des Einschmelzvergasers 1 sammeln sich schmelzflüssige Schlacke 8 und schmelzflüssiges Roheisen 9,die über einen Abstich 10 abgestochen werden.

Das beim Vergasen der Kohle gebildete Reduktionsgas wird aus dem - von einem Kuppelraum 11 gebildeten - oberen Abschnitt 12 des Einschmelzvergasers 1 über eine Reduktionsgasableitung 13 abgezogen und in einem Feststoffabscheider 14, beispielsweise einem Heißzyklon, entstaubt.

Oberhalb des Festbettes 6 durchsetzen Staubbrenner 15 den Mantel des Einschmelzvergasers 1 derart, daß beim Betrieb der Staubbrenner 15 die Brennerflammen 16 schräg von oben gegen die Oberfläche des Festbettes 6 gerichtet sind. Jeder der Staubbrenner 15 weist eine Staubzuleitung 17 für feinteilchenförmige Kohlenstoffträger, beispielsweise im Feststoffabscheider 14 abgeschiedenen Staub, sowie eine Zuleitung 18 für sauerstoffhältiges Gas auf.

Fig. 2 stellt einen horizontalen Schnitt durch den Einschmelzvergaser 1, etwa in der Höhe der Staubbrenner 15, dar.

Die Staubbrenner 15 sind so angeordnet, daß sie schräg von oben gegen die Oberfläche des Festbettes gerichtet sind (Fig. 1) und an der Mitte des Einschmelzvergasers 1 vorbeizeigen, also windschief zur vertikalen Zentralachse des Einschmelzvergasers 1 stehen (Fig. 2).

Durch diese Anordnung der Staubbrenner 15 werden die aus dem Festbett 6 aufsteigenden und im Kuppelraum 11 befindlichen Gase und Feststoffpartikel in eine rotierende Wirbelströmung 20 versetzt, wodurch insgesamt eine Verweilzeitvergleichmäßigung aller Gas- und Feststoffkomponenten im Kuppelraum 11 und damit eine verbesserte Durchmischung erzielt wird.

Die Chargiervorrichtung 2 für stückige Kohle mündet im wesentlichen fluchtend mit der vertikalen Zentralachse 19 in den Einschmelzvergaser 1. Die einzelnen Kohlestücke sind also nicht unmittelbar der Hitzewirkung der Brennerflammen 16 ausgesetzt, wodurch vermieden wird, daß die Kohlestücke durch schlagartige Erhitzung bzw. Entgasung zerplatzen.

Beim Auftreffen der Kohle auf das Festbett gibt die Kohle in einem Pyrolyseschritt ihre flüchtigen Bestandteile (Kohlenwasserstoffe, Teerkomponenten) ab. Der Betrieb der Staubbrenner wird so gesteuert, daß der Kohlenstoffanteil der über Staubleitungen 17 zugeführten feinteilchenförmigen Kohlenstoffträger zu mindestens 40 % zu $CO_2$ verbrennt.

Die von der Kohle abgegebenen flüchtigen Bestandteile werden durch die auf deren Freisetzungsort gerichteten "$CO_2$-Ströme" entweder unmittelbar nach der Freisetzung oxidierend gemäß Gleichung (II) umgesetzt, bzw. durch die im Kuppelraum 11 herrschende Wirbelströmung miteinander vermischt und in der Folge größtenteils umgesetzt, wobei der aus dem Festbett 6 in den Kuppelraum 11 mit den Reduktions- und sonstigen Gasen ausgetragene Eisenstaub katalysierend wirkt.

Das erfindungsgemäße Verfahren ermöglicht eine weitgehend vollständige oxidierende Umsetzung der mit den flüchtigen Bestandteilen aus Kohle abgegebenen Kohlenwasserstoffe, wodurch der gemäß Gleichung (I) thermisch zu Ruß zersetzte Anteil der flüchtigen Bestandteile stark verringert wird und die weiterhin mit dem Reduktionsgas aus dem Einschmelzvergaser 1 ausgetragene Staubfracht keine bzw. wesentlich weniger Anbackungen in nachgeschalteten Apparaturen verursacht.

Die Erfindung beschränkt sich nicht auf das in den Zeichnungen Fig. 1 und Fig. 2 dargestellte Ausführungsbeispiel, sondern umfaßt auch alle dem Fachmann bekannten Mittel, die zur Ausführung der Erfindung herangezogen werden können.

## Patentansprüche

1. Verfahren zur Herstellung von flüssigem Roheisen oder Stahlvorprodukten aus stückigem eisenhältigem Material, wie teil- und/oder fertigreduziertem Eisenschwamm, in einem Einschmelzvergaser, in dem unter Zuführung von stückiger Kohle sowie gegebenenfalls anderem kohlenstoffhältigem Material und sauerstoffhältigem Gas bei gleichzeitiger Bildung eines Reduktionsgases das eisenhältige Material eingeschmolzen wird, gegebenenfalls nach vorheriger Fertigreduktion, wobei stückige Kohle dem Einschmelzvergaser von oben zugeführt wird und, zusammen mit dem eisenhältigen Material, im Einschmelzvergaser ein Festbett bildet, dabei ihren Anteil an flüchtigen Kohlenwasserstoffen in den über dem Festbett befindlichen Kuppelraum abgibt und wobei Staubbrenner, welche mit feinteilchenförmigem Kohlenstoffträger und einem sauerstoffhältigen Gas betrieben werden, in einer horizontalen Querschnittsebene des Kuppelraumes in etwa gleichen Abständen voneinander den Mantel des Einschmelzvergasers durchsetzen und schräg von oben gegen die Oberfläche des Festbettes gerichtet werden, **dadurch gekennzeichnet, daß** der Betrieb der Staubbrenner mit feinteilchenförmigem Kohlenstoffträger und sauerstoffhältigem Gas so gesteuert wird, daß die Verbrennung des Kohlenstoffanteils des feinteilchenförmigen Kohlenstoffträgers - entsprechend der eingestellten Stöchiometrie - zu mindestens 40% zu $CO_2$ erfolgt, wodurch die von der Kohle abgegebenen flüchtigen Kohlenwasserstoffe oxidierend umgesetzt werden.

**2.** Verfahren nach Anspruch 1, **dadurch gekennzeichnet, daß** die Verbrennung des Kohlenstoffanteils des feinteilchenförmigen Kohlenstoffträgers zu mindestens 50 % zu $CO_2$ erfolgt.

**3.** Verfahren nach einem der Ansprüche 1 oder 2, **dadurch gekennzeichnet, daß** die Verbrennung des Kohlenstoffanteils des feinteilchenförmigen Kohlenstoffträgers zu mindestens 70 % zu $CO_2$ erfolgt.

**4.** Verfahren nach einem der Ansprüche 1 bis 3, **dadurch gekennzeichnet, daß** die Staubbrenner so ausgerichtet werden, daß durch die Brennerflammen im Kuppelraum eine gasdurchmischende Wirbelströmung erzeugt wird.

**5.** Verfahren nach einem der Ansprüche 1 bis 4, **dadurch gekennzeichnet, daß** die Staubbrenner zur Erzeugung einer gasdurchmischenden Wirbelströmung entlang von zur vertikalen Zentralachse des Einschmelzvergasers gleichsinning windschief stehenden Linien ausgerichtet werden.

## Claims

**1.** Process for producing liquid pig iron or primary steel products from iron-containing material in lump form, such as partly and/or fully reduced iron sponge, in a fusion gasifier, in which, with lump coal and possibly other carbon-containing material and oxygen-containing gas being fed in, and with simultaneous formation of a reduction gas, the iron-containing material is fused, possibly after prior full reduction, lump coal being fed to the fusion gasifier from above and, together with the iron-containing material, forming a static bed in the fusion gasifier, thereby giving off its fraction of volatile hydrocarbons into the dome space located above the static bed, and pulverized-fuel burners, which are operated with a carbon carrier in fine particle form and an oxygen-containing gas, passing through the shell of the fusion gasifier in a horizontal cross-sectional plane of the dome space at approximately equal distances from one another and being directed obliquely from above towards the surface of the static bed, **characterized in that** the operation of the pulverized-fuel burners with a carbon carrier in fine particle form and oxygen-containing gas is controlled in such a way that the combustion of the carbon fraction of the carbon carrier in fine particle form takes place - in a way corresponding to the stoichiometry - in a proportion of at least 40% to form $CO_2$, whereby the volatile hydrocarbons given off by the coal are converted in an oxidizing manner.

**2.** Process according to Claim 1, **characterized in that** the combustion of the carbon fraction of the carbon carrier in fine particle form takes place in a proportion of at least 50% to form $CO_2$.

**3.** Process according to one of Claims 1 or 2, **characterized in that** the combustion of the carbon fraction of the carbon carrier in fine particle form takes place in a proportion of at least 70% to form $CO_2$.

**4.** Process according to one of Claims 1 to 3, **characterized in that** the pulverized-fuel burners are aligned in such a way that a gas-mixing turbulent flow is generated in the dome space by the burner flames.

**5.** Process according to one of Claims 1 to 4, **characterized in that**, for generating a gas-mixing turbulent flow, the pulverized-fuel burners are aligned along lines extending askew in the same sense with respect to the vertical central axis of the fusion gasifier.

## Revendications

**1.** Procédé de fabrication de fer brut fluide ou de produits précurseurs en acier à partir d'un matériau en morceaux contenant du fer, comme du fer spongieux partiellement et/ou complètement réduit, dans un gazéificateur de fusion, dans lequel, sous apport de charbon en morceaux ainsi que, le cas échéant, d'un autre matériau contenant

du charbon et d'un gaz contenant de l'oxygène, on procède à la fusion du matériau contenant du fer avec formation simultanée d'un gaz de réduction, le cas échéant, après réduction complète préalable, du charbon en morceaux étant acheminé d'en haut au gazéificateur de fusion et un lit solide se formant, conjointement au matériau contenant du fer, dans le gazéificateur de fusion, en abandonnant en l'occurrence sa proportion en hydrocarbures volatils dans la coupole se trouvant au-dessus du lit solide, et des brûleurs à poussière, qui fonctionnent à l'aide d'un vecteur de charbon sous forme de particules fines et d'un gaz contenant de l'oxygène, traversant l'enveloppe du gazéificateur de fusion dans un plan horizontal de section transversale de la coupole à des intervalles les uns des autres en gros identiques et étant dirigés de manière inclinée d'en haut contre la surface du lit solide, **caractérisé en ce que** le fonctionnement des brûleurs à poussière est contrôlé à l'aide du vecteur de charbon sous forme de particules fines et du gaz contenant de l'oxygène de telle manière que la combustion de la portion de charbon du vecteur de charbon sous forme de particules fines - en fonction de la stoechiométrie réglée - se fasse à raison d'au moins 40% pour former du $CO_2$, les hydrocarbures volatils libérés du charbon réagissant de manière à être oxydés.

**2.** Procédé selon la revendication 1, **caractérisé en ce que** la combustion de la portion de charbon du vecteur de charbon sous forme de particules fines se fait à raison d'au moins 50% pour former du $CO_2$.

**3.** Procédé selon l'une quelconque des revendications 1 ou 2, **caractérisé en ce que** la combustion de la portion de charbon du vecteur de charbon sous forme de particules fines se fait à raison d'au moins 70% pour former du $CO_2$.

**4.** Procédé selon l'une quelconque des revendications 1 à 3, **caractérisé en ce que** les brûleurs à poussière sont orientés de telle manière qu'un écoulement à tourbillons causant le mélange des gaz est produit par les flammes de brûleur dans la coupole.

**5.** Procédé selon l'une quelconque des revendications 1 à 4, **caractérisé en ce que** les brûleurs à poussière, en vue de la production d'un écoulement à tourbillons causant le mélange des gaz, sont orientés le long de lignes se trouvant en position déversée dans le même sens par rapport à l'axe central vertical du gazéificateur de fusion.

Fig. 1:

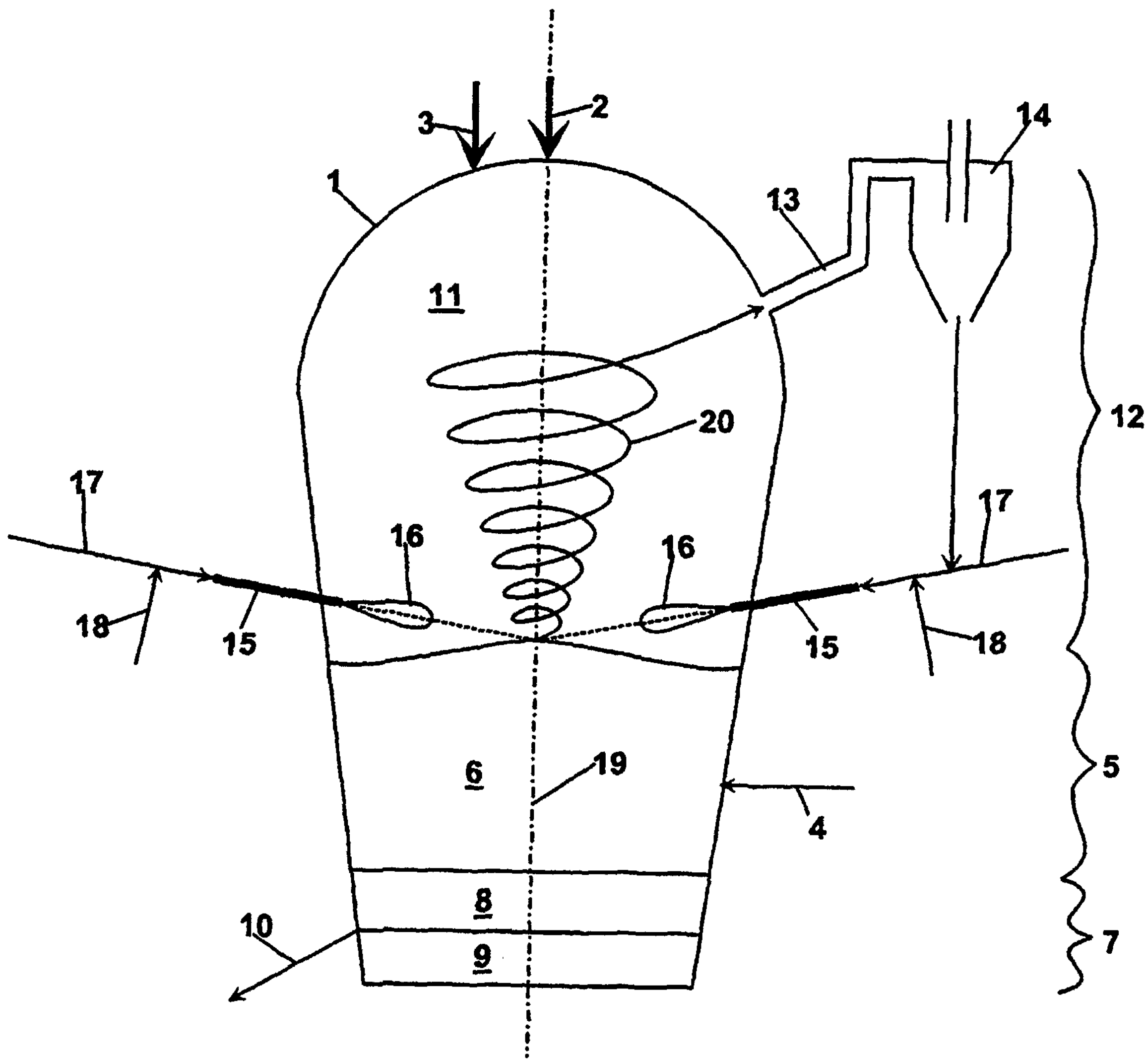

Fig. 2: